# EUROPÄISCHE PATENTANMELDUNG

(11) **EP 4 300 281 A1**
(43) Veröffentlichungstag der Anmeldung: **03.01.2024**
(21) Anmeldenummer: 23177680.8
(22) Anmeldetag: 06.06.2023
(51) Int. Cl.: G06F 3/06, G06F 3/01

(54) **KOPPLUNGSVORRICHTUNG ZUR SORTIERUNG VON DATENTRÄGERN**

(30) Priorität: 27.06.2022 DE 102022206424
(71) Anmelder: Siemens Mobility GmbH, 81739 München (DE)
(72) Erfinder: Umbach, Rainer, 90556 Seukendorf (DE)
(74) Vertreter: Siemens Patent Attorneys

(57) **Zusammenfassung**

Die Erfindung betrifft eine Kopplungsvorrichtung (10) zur Herstellung einer Datenverbindung (12) zwischen Datenträgern (14) und einer Datenverarbeitungsvorrichtung (16). Hierzu weist die Kopplungsvorrichtung (10) wenigstens eine physische Schnittstelle erster Art (18) auf. Mittels dieser ist die Kopplungsvorrichtung (10) mit einem Datenträger (14) verbindbar. Des Weiteren ist eine physische Schnittstelle zweiter Art (20) vorgesehen, mittels welcher die Kopplungsvorrichtung (10) mit der Datenverarbeitungsvorrichtung (16) verbindbar ist. Zudem weist die Kopplungsvorrichtung (10) eine Anzeigevorrichtung (22) auf, mittels welcher Metadaten (M) ausgebbar sind, welche einen mit der Schnittstelle erster Art (18) verbundenen Datenträger (14) und/oder auf diesem Datenträger (14) gespeicherte Daten betreffen.

## Beschreibung

Die Erfindung betrifft eine Kopplungsvorrichtung, ein System mit dieser Kopplungsvorrichtung, ein Verfahren zur Sortierung von Datenträgern, ein Computerprogramm sowie ein computerlesbares Medium.

Kopplungsvorrichtungen sind gemeinhin auch als "Dockingstationen" bekannt und werden üblicherweise als ein Bindeglied zwischen einer Datenverarbeitungsvorrichtung und einem Datenträger eingesetzt. Dies ermöglicht es, verschiedene Datenträger an einer zentralen Datenverarbeitungsvorrichtung zu warten, auszulesen, zu löschen oder zu beschreiben. Liegen allerdings eine große Anzahl an Datenträgern vor, kann es leicht zu einem Zuordnungsproblem kommen. Beispielsweise werden Daten eines Überwachungssystems auf verschiedenen Festplatten gespeichert, da große zu speichernde Datenmengen anfallen und möglicherweise verschiedene Gegenstände bzw. verschiedene Perspektiven und/oder große Flächen zu überwachen sind. Um Geschehnisse wie Einbruch, Diebstahl, Vandalismus oder Unfälle rasch nachvollziehen zu können, ist allerdings eine eindeutige Zuordnung eines Datenträgers zu einem Überwachungsabschnitt und/oder einem Überwachungszeitraum erforderlich. Da einem Datenträger anhand äußerlicher Merkmale nicht unmittelbar ein Inhalt zuzuordnen ist, bedarf es beispielsweise eines Zuordnungssystems, wie einer Datenbank oder einer Tabelle. Ein solches Zuordnungssystem bedarf einer akribischen und sorgfältigen Pflege, damit dieses einen Nutzen hat. Die Praxis zeigt jedoch, dass solche Zuordnungssysteme hochgradig fehleranfällig sind. Bereits einfache Zahlendreher können eine Zuordnung eines Datenträgers zu dessen Inhalt nahezu unmöglich machen. Solche Fehler haben zur Folge, dass Datenträger manuell ausgelesen und erneut zugeordnet werden müssen. Dies stellt einen großen Aufwand dar und behebt dennoch nicht das Problem, dass bei einer großen Anzahl an Datenträgern eine Übersicht schnell verloren gehen kann.

Aufgabe der Erfindung ist es, eine aufwandsgünstige und sichere Identifizierung von auf einem Datenträger gespeicherten Daten zu ermöglichen.

Diese Aufgabe wird gelöst durch eine Kopplungsvorrichtung mit den Merkmalen des Anspruchs 1. Des Weiteren wird diese Aufgabe gelöst mit einem System gemäß den Merkmalen des nebengeordneten Systemanspruchs. Ferner wird diese Aufgabe gelöst durch ein Verfahren zur Zuordnung von Datenträgern gemäß den Merkmalen des nebengeordneten Verfahrensanspruchs. Zudem wird diese Aufgabe gelöst durch ein Computerprogramm gemäß den Merkmalen des nebengeordneten Computerprogrammanspruchs sowie durch ein computerlesbares Medium gemäß den Merkmalen des Anspruchs 15.

Vorteilhafte Weiterbildungen der Erfindung können jeweils abhängigen Unteransprüchen entnommen werden.

Mittels der erfindungsgemäßen Kopplungsvorrichtung ist eine Datenverbindung zwischen Datenträgern und einer Datenverarbeitungsvorrichtung herstellbar. Diese Kopplungsvorrichtung weist wenigstens eine physische Schnittstelle erster Art auf, mittels welcher die Kopplungsvorrichtung mit einem der genannten Datenträger verbindbar ist. Des Weiteren weist die Kopplungsvorrichtung eine physische Schnittstelle zweiter Art auf, mittels welcher die Kopplungsvorrichtung mit der Datenverarbeitungsvorrichtung verbindbar ist. Ferner weist die Kopplungsvorrichtung eine Anzeigevorrichtung auf, mittels welcher Metadaten ausgebbar sind. Bei den ausgebbaren Metadaten handelt es sich um solche Daten, welche einen mit der Schnittstelle erster Art verbundenen Datenträger betreffen. Alternativ oder zusätzlich handelt es sich bei den ausgebbaren Metadaten um solche Daten, welche die auf dem Datenträger mit der Schnittstelle erster Art verbundenen Datenträger gespeicherte Daten betreffen. Eine solche Kopplungsvorrichtung ist insbesondere als "Dockingstation" bekannt. Die genannten physischen Schnittstellen werden alternativ auch als Hardware-Schnittstellen bezeichnet. Dabei kann es sich bei den physischen Schnittstellen um solche Schnittstellen handeln, mittels welchen entweder eine serielle oder eine nebenläufige Datenübertragung realisiert wird. Vorzugsweise ist die Schnittstelle erster Art als eine Serial Attached SCSI (SAS)-Schnittstelle, eine Serial AT Attachment (SATA)-Schnittstelle, eine USB-Schnittstelle, eine Thunderbolt-Schnittstelle oder eine FireWire-Schnittstelle ausgebildet. Die Schnittstelle zweiter Art ist bevorzugt als eine PCI-Bus-Schnittstelle, eine Accelerated Graphics Port (AGP)-Schnittstelle, eine SATA-Schnittstelle, eine Thunderbolt-Schnittstelle oder eine SAS-Schnittstelle ausgebildet.

Bei den ausgebbaren Metadaten handelt es sich beispielsweise um eine Festplattenseriennummer, eine Information betreffend einen letzten Betriebsort des Datenträgers, eine Information bezüglich einer räumlichen Zuordnung von gespeicherten Daten, wie einer Fahrzeugidentifikationsnummer, einer Adresse, eines Überwachungsabschnitts oder einer Raumnummer. Des Weiteren kann es sich bei den ausgebbaren Metadaten um Information handeln, welche eine Aktualität der gespeicherten Daten, eine Anzahl an gespeicherten Datensätzen oder einen Betriebszustand des Datenträgers betreffen. Bei dem Datenträger handelt es sich vorzugsweise um einen nicht flüchtigen Datenträger, welcher Daten beispielhaft mechanisch, elektronisch, magnetisch, optisch und/oder magneto-optisch speichert. Ferner kann es sich bei dem Datenträger um ein Festplattenlaufwerk, ein Festkörperspeicher, ein Flash-EEPROM-Speicher, Kombinationen aus den vorgenannten Datenträgertypen oder weiteren, dem Fachmann bekannten, Datenträgern handeln. Besonders bevorzugt ist der Datenträger als ein Wechseldatenträger ausgebildet.

Bei der genannten Datenverarbeitungsvorrichtung kann es sich um einen Computer, einen Mikrocontroller, einen Prozessor oder eine programmierbare Hardwarekomponente handeln. Ferner ist es denkbar, dass es sich bei der Datenverarbeitungsvorrichtung um eine virtualisierte Hardwareressource einer Rechnerwolke oder um eine Laufzeitumgebung mit veränderbaren Rechen- und/oder Speicherkapazitäten handelt. Eine solche Laufzeitumgebung soll im vorliegenden Zusammenhang im Sinne der Informatik verstanden werden. Beispielsweise ist die Laufzeitumgebung dazu konfiguriert, Daten zu lesen, zu schreiben, zu übertragen und/oder zu verwalten.

Mittels der Kopplungsvorrichtung kann eine einfache und aufwandsgünstige Zuordnung von Datenträgern und darauf gespeicherten Daten realisiert werden. Weisen beispielsweise verschiedene Datenträger verschiedene Informationen bezüglich verschiedener Gegenstände oder Zeiträume auf, wird anhand der angezeigten Metadaten eine rasche Sortierung der Datenträger nach Information von Interesse ermöglicht. Auf ein zeitintensives Auslesen und in Augenschein nehmen von Datenträgern sowie den darauf befindlichen Daten zum Zwecke einer Zuordnung deren Inhalts kann so verzichtet werden.

Eine vorteilhafte Weiterbildung sieht vor, dass die Kopplungsvorrichtung mehrere Schnittstellen erster Art aufweist. Des Weiteren sieht diese vorteilhafte Weiterbildung vor, dass mittels der Anzeigevorrichtung jeder der mehreren Schnittstellen erster Art Metadaten eines mit der jeweiligen Schnittstelle erster Art verbundenen Datenträgers zugeordnet sind. Auf diese Weise wird es ermöglicht, mehrere Datenträger nebenläufig auszuwerten oder zu sortieren. Findet beispielsweise eine länger andauernde Auswertung eines Datenträgers mittels einer der Schnittstellen erster Art statt, so stehen weitere Schnittstellen erster Art zur Verfügung. Wartezeiten können so einfach verringert oder vermieden werden. Auf diese Weise kann mittels der Kopplungsvorrichtung ein effizienter Arbeitsablauf ermöglicht werden.

Des Weiteren sieht eine vorteilhafte Weiterbildung vor, dass die Anzeigevorrichtung mehrere Displays aufweist, welche derart angeordnet sind, dass jeweils eines der mehreren Displays einer der mehreren Schnittstellen erster Art oder einem mit dieser Schnittstelle erster Art verbundenen Datenträger zugeordnet ist. Dies ermöglicht eine unmittelbare visuelle Zuordnung eines Displays zu einem Datenträger. Des Weiteren können hierdurch Zuordnungsfehler weiter verhindert werden. Vorzugsweise ist das Display unmittelbar benachbart zu einem Datenträger in einem mit der Schnittstelle verbundenen Zustand angeordnet. Alternativ oder zusätzlich ist in einer bevorzugten Weise das Display unmittelbar benachbart zu einem für einen Datenträger vorgesehenen Aufnahmeschacht der Kopplungsvorrichtung angeordnet. Beispielsweise ist wenigstens eines der mehreren Displays als ein LED-Display, ein LCD-Display und/oder ein Touchscreen ausgebildet.

In einer weiteren vorteilhaften Weiterbildung weist die Kopplungsvorrichtung eine Benutzerschnittstelle auf, mittels welcher ein Betriebszustand eines Datenträgers in einem mit der Schnittstelle erster Art verbundenen Zustand veränderbar ist. Dies ermöglicht es, einen einfachen und sicheren Betrieb der Kopplungsvorrichtung zu realisieren.

Eine vorteilhafte Ausführungsvariante sieht vor, dass mittels der Benutzerschnittstelle ein verschlüsselter Datenträger in einem mit einer Schnittstelle erster Art verbundenen Zustand entschlüsselbar ist. Denkbar ist hierbei, dass mittels der Benutzerschnittstelle ein Entschlüsselungspasswort eingebaut ist. Vorzugsweise handelt es sich bei der Benutzerschnittstelle um eine Tastatur und/oder ein Touchscreen. Bevorzugt ist die Benutzerschnittstelle jedoch als ein Taster ausgebildet, mittels welchem bei dessen Betätigung der genannte Datenträger entschlüsselbar ist. Eine solche Entschlüsselung ist beispielsweise realisierbar, indem auf Betätigung der Benutzerschnittstelle hin ein Standardpasswort angewandt wird. So kann eine besonders einfache und zeiteffiziente Handhabung der Kopplungsvorrichtung realisiert werden.

Eine weitere vorteilhafte Ausführungsvariante sieht vor, dass mittels der Benutzerschnittstelle eine elektrische Verbindung zwischen einem Datenträger in einem mit der Schnittstelle erster Art verbundenen Zustand und der Kopplungsvorrichtung herstellbar und/oder trennbar ist. Bevorzugt ist die Benutzerschnittstelle hierzu als ein Taster oder ein Touchscreen ausgebildet. Dies ermöglicht eine aufwandsgünstige und sichere Möglichkeit, Datenträger schonend auszuwerfen oder einzuhängen. Eine elektrische Verbindung zum Zwecke einer Herstellung einer Datenverbindung kann so auf eine sichere Weise hergestellt oder getrennt werden.

Ferner sieht eine vorteilhafte Ausführungsvariante vor, dass je eine Benutzerschnittstelle einem Datenträger in einem mit der Schnittstelle erster Art verbundenen Zustand zugeordnet ist. Durch eine solche Zuordnung können Fehlerquellen während eines Betriebs der Kopplungsvorrichtung aufgrund einer fehlerhaften Zuordnung einer Benutzerschnittstelle reduziert werden.

Des Weiteren sieht eine vorteilhafte Weiterbildung vor, dass die Kopplungsvorrichtung eine Steuerungsvorrichtung aufweist. Diese Steuerungsvorrichtung ist mit der Anzeigevorrichtung und/oder mit der Benutzerschnittstelle verbunden. Des Weiteren ist die Steuerungsvorrichtung dazu eingerichtet, die Anzeigevorrichtung und/oder die Benutzerschnittstelle anzusteuern. Eine bereits bestehende Kopplungsvorrichtung kann so mittels der Steuerungsvorrichtung sowie einer Anzeigevorrichtung und/oder einer Benutzerschnittstelle einfach und aufwandsgünstig nachgerüstet werden.

Eine vorteilhafte Ausführungsvariante sieht vor, dass die Steuervorrichtung mit der Schnittstelle zweiter Art verbunden ist und dazu eingerichtet ist, mit der Datenverarbeitungsvorrichtung zu kommunizieren. Dies ermöglicht einen einfachen Austausch von Daten zwischen der Kopplungsvorrichtung und der Datenverarbeitungsvorrichtung. Die Steuerungsvorrichtung und die Datenverarbeitungsvorrichtung können sich auf diese Weise gegenseitig ergänzen und/oder ersetzen. Abzuarbeitende Aufgaben können zwischen der Steuerungsvorrichtung und der Datenverarbeitungsvorrichtung beispielsweise nach Maßgabe einer jeweiligen Arbeitsauslastung aufgeteilt werden.

Eine weitere vorteilhafte Ausführungsvariante sieht vor, dass die Steuerungsvorrichtung derart mit der Schnittstelle erster Art verbunden ist, dass mittels dieser Steuerungsvorrichtung Metadaten eines mit der Schnittstelle erster Art verbundenen Datenträgers auslesbar sind. Auf diese Weise kann ein selbständiger Betrieb der Kopplungsvorrichtung erreicht werden. Insbesondere kann die Kopplungsvorrichtung so unabhängig von einer externen Datenverarbeitungsvorrichtung betrieben werden. Dies ermöglicht einen mobilen Betrieb der Kopplungsvorrichtung.

Eine vorteilhafte Ausführungsform sieht vor, dass die Steuervorrichtung dazu eingerichtet ist, einen Betriebszustand eines Datenspeichers in einem mit der Schnittstelle erster Art verbundenen Zustand zu verändern. Eine Betriebssicherheit einer mobilen Kopplungsvorrichtung kann auf diese Weise gesteigert werden.

Das erfindungsgemäße System weist die erfindungsgemäße Kopplungsvorrichtung auf.

Des Weiteren weist das erfindungsgemäße System mehrere Datenträger auf. Jeder dieser mehreren Datenträger weist eine physische Schnittstelle auf, welche in Form einer Steckverbindung mit einer Schnittstelle erster Art der Kopplungsvorrichtung verbindbar ist. Dies ermöglicht eine einfache Handhabung des Systems zum Zwecke einer Auswertung oder Sortierung der Datenträger.

In einer vorteilhaften Weiterbildung weist das System eine Datenverarbeitungsvorrichtung auf, welche eine physische Schnittstelle aufweist, welche mit einer Schnittstelle zweiter Art der Kopplungsvorrichtung verbindbar ist. Bei der genannten Datenverarbeitungsvorrichtung handelt es sich insbesondere um die bereits zuvor im Zusammenhang mit der Kopplungsvorrichtung beschriebene Datenverarbeitungsvorrichtung. Mittels der Datenverarbeitungsvorrichtung können ressourcenintensive Auswertungs- oder Auslesevorgänge schnell abgearbeitet werden, wobei eine Dimensionierung von Hardwareressourcen, wie Speicher- oder Rechenkapazitäten der Kopplungsvorrichtung klein gehalten werden können. So kann eine kompakte Kopplungsvorrichtung bereitgestellt werden. Ferner besteht die Möglichkeit, eine Steuerung der Kopplungsvorrichtung mittels der Datenverarbeitungsvorrichtung zu realisieren.

Mittels der erfindungsgemäßen Kopplungsvorrichtung kann das erfindungsgemäße Verfahren zur Auswertung von Datenträgern durchgeführt werden.

Das erfindungsgemäße Verfahren sieht vor, dass Metadaten eines mit einer Schnittstelle erster Art der Kopplungsvorrichtung verbundenen Datenträgers ausgelesen werden. Bei diesen Metadaten handelt es sich insbesondere um die im Zusammenhang mit der Kopplungsvorrichtung beschriebenen Metadaten. Des Weiteren handelt es sich bei der genannten Schnittstelle erster Art und Schnittstelle zweiter Art insbesondere jeweils um die vorgenannte Schnittstelle erster Art und Schnittstelle zweiter Art der vorhergehend beschriebenen Kopplungsvorrichtung. Das Verfahren sieht weiter vor, dass die ausgelesenen Metadaten der Schnittstelle erster Art zugeordnet werden. Mittels einer Anzeigevorrichtung werden die der Schnittstelle erster Art zugeordneten Metadaten ausgegeben. Bei dieser Anzeigevorrichtung handelt es sich insbesondere um die vorhergehend genannte Anzeigevorrichtung der Kopplungsvorrichtung. Dies ermöglicht es, ein effizientes Verfahren zum Zwecke einer Zuordnung von Datenträgern bereitzustellen. Besonders vorteilhaft ist dieses Verfahren zum Zwecke einer Auswertung einer Vielzahl an Datenträgern, welche zumindest teilweise Daten eines Überwachungssystems aufweisen. In der Praxis hat sich dieses Verfahren bereits bei einer Sortierung und Auswertung von Datenträgern bewährt, welche ein oder mehrere schienengebundene Fahrzeuge überwachen. Datenträger können so rasch einem Überwachungszeitraum, einem Fahrzeug sowie einem Fahrzeugabschnitt zugeordnet werden. Betrifft ein Inhalt beispielsweise Fahrzeuge oder Fahrzeugabschnitte von geringem Interesse, so können diese rasch aussortiert werden. Dahingegen kann ein Fokus einer Auswertung auf diejenigen Datenträger gerichtet werden, deren Inhalt Fahrzeuge oder Fahrzeugabschnitte von hohem Interesse betreffen.

Eine vorteilhafte Weiterbildung des Verfahrens sieht vor, dass ein verschlüsselter, mit der Schnittstelle erster Art verbundener Datenträger mittels einer Benutzerschnittstelle der Kopplungsvorrichtung entschlüsselt wird. Bei der genannten Benutzerschnittstelle handelt es sich insbesondere um die bereits zuvor im Zusammenhang mit der Kopplungsvorrichtung genannte Benutzerschnittstelle. Vorzugsweise werden mittels einer Betätigung der Benutzerschnittstelle zumindest Metadaten entschlüsselt. Auf diese Weise wird ein Entschlüsselungsvorgang erheblich erleichtert. Beispielsweise kann so auf Knopfdruck eine Entschlüsselung eines Datenträgers oder der sich darauf befindlichen Metadaten erreicht werden. Es besteht daher die Möglichkeit, eine weitestgehend automatisierte Entschlüsselung bereitzustellen.

Ferner sieht eine vorteilhafte Weiterbildung des Verfahrens vor, dass mittels der Benutzerschnittstelle der Kopplungsvorrichtung eine elektrische Verbindung zwischen der Schnittstelle erster Art und dem mit dieser Schnittstelle erster Art verbundenen Datenträger hergestellt oder getrennt wird. Dies ermöglicht ein betriebssicheres Einhängen oder Auswerfen eines Datenträgers. Ein Risiko, dass Daten auf Datenträgern aufgrund einer unkontrollierten Herstellung oder Trennung einer elektrischen Verbindung beschädigt werden, kann so zuverlässig verhindert werden.

Des Weiteren sieht eine vorteilhafte Weiterbildung des Verfahrens vor, dass die Metadaten mehrerer Datenträger ausgelesen werden, wobei jeder dieser Datenträger mit je einer Schnittstelle erster Art verbunden ist. Einem Datenträger zugehörige Metadaten werden jeweils derjenigen Schnittstelle erster Art zugeordnet, mit welcher dieser Datenträger verbunden ist. Mittels der Anzeigevorrichtung werden die einer jeden Schnittstelle erster Art zugeordneten Metadaten der jeweiligen Schnittstelle erster Art visuell zugeordnet ausgegeben. Inhalte von Datenträgern können so aufwandsgünstig und schnell von einem Benutzer erfasst, zugeordnet und auf Relevanz geprüft werden.

Zudem sieht eine vorteilhafte Weiterbildung des Verfahrens vor, dass mittels der Anzeigevorrichtung eine Information einen Betriebszustand eines Datenträgers betreffend angezeigt wird. Des Weiteren wird mittels der Anzeigevorrichtung diese Information dem mit der Schnittstelle erster Art verbundenen Datenträger zugeordnet. Eine solche Anzeige einer Information eines Betriebszustands eines Datenträgers kann beispielsweise mittels Blinken, in Textform oder anhand von Farbwechseln realisiert werden. Dies ermöglicht es, einem Benutzer der Kopplungsvorrichtung auf einfache Weise optisch einen Betriebszustand eines Datenträgers anzuzeigen. Ein Arbeitsablauf kann auf diese Weise weiter optimiert werden. Beispielhaft kann auf einfache Weise ein Zustand einer elektrischen Verbindung zwischen der Kopplungsvorrichtung und einem Datenträger oder ein Entschlüsselungszustand eines Datenträgers visuell von dem Benutzer erfasst werden.

Des Weiteren ist erfindungsgemäß ein Computerprogramm vorgesehen, welches bei dessen Ausführung die erfindungsgemäße Vorrichtung dazu veranlasst, das erfindungsgemäße Verfahren durchzuführen.

Zudem sieht die Erfindung ein Computerprogramm vor, welches bei dessen Ausführung das erfindungsgemäße System dazu veranlasst, das erfindungsgemäße Verfahren durchzuführen.

Des Weiteren wird ein computerlesbares Medium vorgeschlagen. Dieses weist Instruktionen auf, welche die erfindungsgemäße Vorrichtung dazu veranlassen, das erfindungsgemäße Verfahren durchzuführen. Alternativ oder zusätzlich weist das computerlesbare Medium Instruktionen auf, welche das erfindungsgemäße System dazu veranlassen, das erfindungsgemäße Verfahren durchzuführen. Bei dem computerlesbaren Medium kann es sich beispielsweise um eine CD-ROM, eine DVD, einen USB- oder Flash-Speicher oder um ein nicht körperliches Medium, wie ein Datenstrom und/oder ein Datenträgersignal handeln.

Die voranstehend beschriebenen Eigenschaften, Merkmale und Vorteile der Erfindung sowie die Art und Weise, wie diese erreicht werden, werden im Zusammenhang mit den Figuren in der folgenden Beschreibung der Ausführungen der Erfindung näher erläutert. Soweit zweckdienlich, werden in den Figuren dieselben Bezugszeichen für dieselben oder einander entsprechende Elemente der Erfindung verwendet. Das Ausführungsbeispiel dient der Erläuterung der Erfindung und beschränkt die Erfindung nicht auf die darin angegebenen Kombinationen von Merkmalen, auch nicht in Bezug auf funktionale Merkmale. Zudem können alle in dem Ausführungsbeispiel angegebenen Merkmale isoliert betrachtet und in geeigneter Weise mit den Merkmalen eines beliebigen Anspruchs kombiniert werden.

Es zeigen:
- FIG 1: eine schematische Darstellung eines Ausführungsbeispiels einer erfindungsgemäßen Kopplungsvorrichtung sowie eine Illustration eines Beispiels eines erfindungsgemäßen Verfahrens;
- FIG 2: ein Ausführungsbeispiel eines erfindungsgemäßen Systems mit der erfindungsgemäßen Kopplungsvorrichtung sowie eine Illustration des Beispiels des erfindungsgemäßen Verfahrens;
- FIG 3: eine schematische Illustration des erfindungsgemäßen Verfahrens.

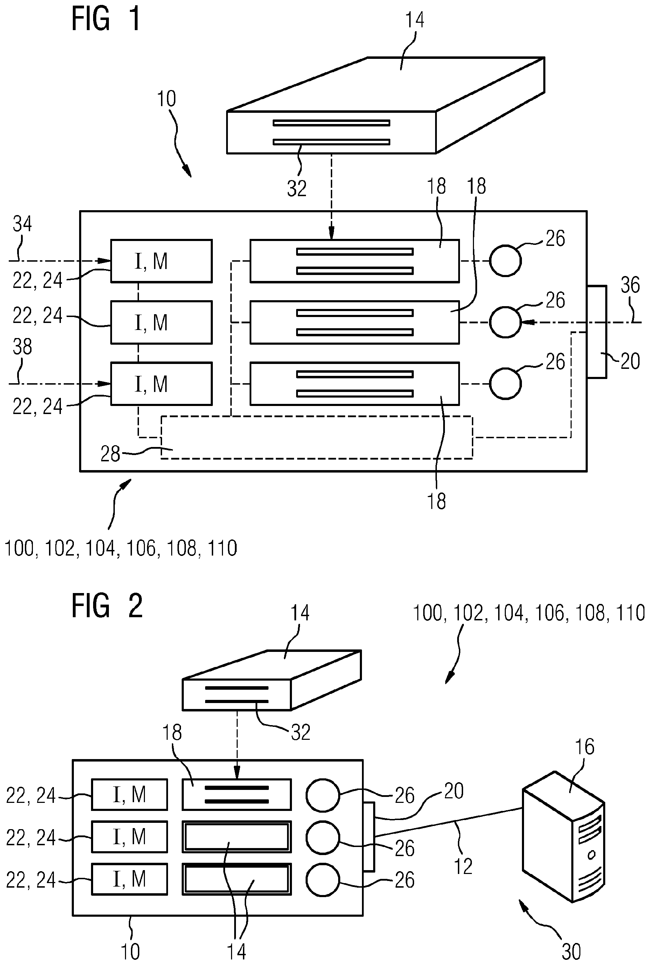

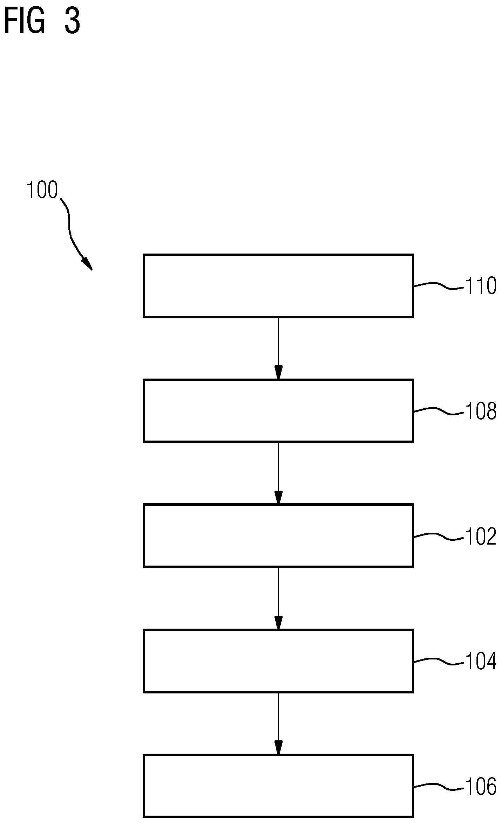

FIG 1 zeigt ein Ausführungsbeispiel einer Kopplungsvorrichtung 10 in einer schematischen Darstellung. Des Weiteren illustriert FIG 1 ein Beispiel eines Verfahrens 100 zur Auswertung von Datenträgern 14. Dieses Beispiel des Verfahrens 100 ist zusätzlich in FIG 3 schematisch illustriert.

Im vorliegend beschriebenen Ausführungsbeispiel weist Kopplungsvorrichtung 10 drei Schnittstellen erster Art 18 auf. Diese sind jeweils als eine SATA-Schnittstelle ausgebildet. Alternativ ist denkbar, dass die Schnittstellen erster Art 18 als SCSI-Schnittstelle oder als Thunderbolt-Schnittstelle ausgebildet sind. Ferner können die drei Schnittstellen erster Art 18 unterschiedlich ausgebildet sein. Des Weiteren weist die Kopplungsvorrichtung 10 eine Anzeigevorrichtung 22 auf. Beispielhaft umfasst diese Anzeigevorrichtung 22 drei Displays 24, welche jeweils dazu eingerichtet sind, Metadaten M sowie eine Information I bezüglich eines Betriebszustands eines Datenträgers 14 auszugeben 106. Des Weiteren weist die Kopplungsvorrichtung 10 im vorliegenden Ausführungsbeispiel drei als Taster ausgebildete Benutzerschnittstellen 26 auf. Je eine der drei Benutzerschnittstellen 26 sowie je eines der drei Displays 24 der Anzeigevorrichtung 22 ist einer der drei Schnittstellen erster Art 18 zugeordnet. Im vorliegenden Ausführungsbeispiel sind die drei Schnittstellen erster Art 18 jeweils in einer von drei Zeilen 34, 36, 38 angeordnet. In jeder dieser Zeilen 34, 36, 38 ist je eines der drei Displays 24 und je eine der drei Benutzerschnittstellen 26 zu einer jeweiligen Schnittstelle erster Art 18 zugeordnet. Am Beispiel einer ersten Zeile 34 der drei Zeilen 34, 36, 38 ist eines der drei Displays 24 links der Schnittstelle erster Art 18 und die Benutzerschnittstelle 26 rechts der Schnittstelle erster Art 18 angeordnet. Diese Anordnung bietet einem Benutzer eine schnelle visuelle Zuordnung von auf dem Display 24 angezeigten Metadaten M zu der sich unmittelbar daneben befindlichen Schnittstelle erster Art 18. Gleichfalls ist mittels der genannten Anordnung eine Benutzerschnittstelle 26 visuell der Schnittstelle erster Art 18 zugeordnet, welche dem Benutzer die schnelle visuelle Zuordnung ermöglicht. Alternativ ist denkbar, dass die Anordnung anstatt in Zeilen 34, 36, 38 in einer nicht näher dargestellten Weise in Spalten realisiert wird. Ferner ist denkbar, dass die Benutzerschnittstelle 26 und die Displays 24 unmittelbar nebeneinander angeordnet sind, und/oder dass die Displays 24 eine integrierte Benutzerschnittstelle 26, wie beispielsweise in Form eines Touchscreens, aufweisen. Alternativ kann die Anzeigevorrichtung 22 als ein einziges Display 24 ausgebildet sein, welches anhand gestalterischer Abgrenzungen eine eindeutige visuelle Zuordnung von angezeigten Informationen I zu einer jeweiligen Schnittstelle erster Art 18 ermöglicht.

Der beispielhaft in FIG 1 gezeigte Datenträger 14 ist eine SSD-Festplatte. Diese weist eine physische Schnittstelle 32 auf, welche in deren Form korrelierend zu der Schnittstelle erster Art 18 ausgebildet ist. Auf diese Weise wird der Datenträger 14 mittels einer Steckverbindung mit der Schnittstelle erster Art 18 zum Zwecke eines Auslesens 102 von Metadaten M verbunden.

Zudem weist die Kopplungsvorrichtung 10 eine Schnittstelle zweiter Art 20 auf. Mittels der Schnittstelle zweiter Art 20 ist die Kopplungsvorrichtung 10 mit einer in FIG 2 näher dargestellten Datenverarbeitungsvorrichtung 16 verbindbar. Bei der Schnittstelle zweiter Art 20 handelt es sich beispielhaft um eine USB-Schnittstelle. Alternativ oder zusätzlich kann es sich bei der Schnittstelle zweiter Art 20 um eine Thunderbolt-Schnittstelle oder um eine SATA-Schnittstelle handeln.

Darüber hinaus weist die Kopplungsvorrichtung 10 eine Steuerungsvorrichtung 28 auf. In dem vorliegend beschriebenen Ausführungsbeispiel der Kopplungsvorrichtung 10 ist diese Steuerungsvorrichtung 28 sowohl mit den drei Displays 24, den drei Schnittstellen erster Art 18, den drei Benutzerschnittstellen 26 sowie der Schnittstelle zweiter Art 20 verbunden.

Mittels der Steuerungsvorrichtung 28 werden die Anzeigevorrichtung 22 sowie die Benutzerschnittstellen 26 angesteuert.

Des Weiteren ist die Steuerungsvorrichtung 28 im vorliegenden Ausführungsbeispiel dazu eingerichtet, eine elektrische Verbindung zwischen einem mit der Schnittstelle erster Art 18 mittels der Steckverbindung verbundenen Datenträger 14 herzustellen oder zu trennen 110. Zudem ist die Steuerungsvorrichtung 28 dazu eingerichtet, den mit der Schnittstelle erster Art 18 verbundenen Datenträger 14, zu entschlüsseln 108. Im Folgenden wird das Ausführungsbeispiel exemplarisch anhand eines Datenträgers 14 erläutert, welcher mit der Schnittstelle erster Art 18 der ersten Zeile 34 verbunden wird. Ist der Datenträger 14 mit der Schnittstelle erster Art 18 der ersten Zeile 34 verbunden, so wird mittels einer Betätigung des in der ersten Zeile 34 angeordneten Tasters 26 eine elektrische Verbindung zwischen dieser Schnittstelle erster Art 18 und diesem Datenträger 14 hergestellt 110. Im vorliegenden Ausführungsbeispiel geschieht dies dadurch, dass ein Benutzer den Taster 26 einmal kurz betätigt. Scheitert daraufhin ein Auslesen 102 der Metadaten M dieses Datenträgers 14 aufgrund dessen, dass der Datenträger 14 verschlüsselt ist, so wird mittels zweimaligen Drückens des Tasters 26 der eingehängte Datenträger 14 entschlüsselt 108. Zum Zwecke dieser Art der Entschlüsselung 108 ist beispielsweise in einem nicht näher dargestellten Speicher der Steuerungsvorrichtung 28 ein Standardpasswort hinterlegt, anhand dessen der Datenträger 14 entschlüsselt wird 108.

Des Weiteren wird in Abhängigkeit davon, ob der mit der in der ersten Zeile 34 angeordneten Schnittstelle erster Art 18 verbundene Datenträger 14 eingehängt, verschlüsselt, entschlüsselt oder ausgehängt ist, wird mittels der Steuerungsvorrichtung 28 über das in der ersten Zeile 34 angeordnete Display 24 eine Information I den Betriebszustand des angehängten Datenträgers 14 betreffend ausgegeben 106. Beispielsweise kann diese Information I in Textform, in Form verschiedener Farben oder als optisches Signal ausgegeben werden 106. Sobald mittels der Steuerungsvorrichtung 28 der eingehängte Datenträger 14 der ersten Zeile 34 auslesbar ist, werden mittels der Steuerungsvorrichtung 28 Metadaten M des eingehängten Datenträgers 14 ausgelesen 102. Diese Metadaten M werden daraufhin dem Display 24 der ersten Zeile 34 zugeordnet 104 und von diesem Display 24 ausgegeben 106. Ein Aushängen des Datenträgers 14 erfolgte beispielhaft durch aufeinanderfolgendes dreimaliges oder alternativ durch längeres Betätigen des Tasters 26 der ersten Zeile 34. Daraufhin wird mittels der Steuerungsvorrichtung 28 eine elektrische Verbindung zwischen der Schnittstelle erster Art 18 der ersten Zeile 34 und dem darin eingehängten Datenträger 14 getrennt 110.

FIG 2 zeigt ein Ausführungsbeispiel eines Systems 30 in einer schematischen Darstellung. Des Weiteren illustriert FIG 2 das Beispiel des Verfahrens 100 zur Herstellung einer Datenverbindung 12 zwischen Datenträgern 14 und einer Datenverarbeitungsvorrichtung 16.

Das System 30 weist im vorliegenden Ausführungsbeispiel die im Zusammenhang mit FIG 1 beschriebene Kopplungsvorrichtung 10 auf. Des Weiteren weist das System 30 mehrere Datenträger 14 von der Art des im Zusammenhang mit FIG 1 beschriebenen Datenträgers 14 auf. Beispielhaft ist ein Datenträger 14 mit der Schnittstelle erster Art 18 der zweiten Zeile 36 und ein Datenträger 14 mit der Schnittstelle erster Art 18 der dritten Zeile 38 verbunden. Zudem weist das System 30 eine Datenverarbeitungsvorrichtung 16 auf, welche vorliegend beispielhaft als ein Computer ausgebildet ist. Diese Datenverarbeitungsvorrichtung 16 ist im vorliegend beschriebenen Ausführungsbeispiel mit der als USB-Schnittstelle ausgebildeten Schnittstelle zweiter Art 20 der Kopplungsvorrichtung 10 verbunden. Alternativ oder zusätzlich kann diese Schnittstelle zweiter Art 20 als eine SATA-Schnittstelle oder eine Thunderbolt-Schnittstelle ausgebildet sein. Denkbar ist, dass die im Zusammenhang mit dem in FIG 1 erläuterten Ausführungsbeispiel beschriebene Steuerungsvorrichtung 28 der Kopplungsvorrichtung 10 zumindest teilweise durch die Datenverarbeitungsvorrichtung 16 ersetzt oder ergänzt wird. In einer ersten Variante könnte beispielhaft gänzlich auf die Steuerungsvorrichtung 28 verzichtet werden. Die vorhergehend im Zusammenhang mit FIG 1 beschriebenen Aufgaben und Tätigkeiten der Steuerungsvorrichtung 28 würden dabei entsprechend durch die Datenverarbeitungsvorrichtung 16 durchgeführt. In einer anderen Variante ist es denkbar, dass die Steuerungsvorrichtung 28 eine Ansteuerung der Displays 24 und eine Verarbeitung der Signale der Benutzerschnittstellen 26 übernimmt. Dabei liest die Datenverarbeitungsvorrichtung 16 die Datenträger 14 sowie deren Metadaten M aus 102. In einer weiteren Variante ist es denkbar, dass sich die Steuerungsvorrichtung 28 und die Datenverarbeitungsvorrichtung 16 die im Zusammenhang mit FIG 1 beschriebenen Tätigkeiten und Aufgaben der Steuerungsvorrichtung 28 in Abhängigkeit deren jeweiligen Ressourcenauslastung aufteilen.

FIG 3 illustriert schematisch das im Zusammenhang mit FIG 1 und FIG 2 bereits beschriebene Beispiel des Verfahrens 100.

Obwohl die Erfindung im Detail durch die bevorzugten Ausführungen näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Kopplungsvorrichtung (10) zur Herstellung einer Datenverbindung (12) zwischen Datenträgern (14) und einer Datenverarbeitungsvorrichtung (16) aufweisend
- wenigstens eine physische Schnittstelle erster Art (18), mittels welcher die Kopplungsvorrichtung (10) mit einem Datenträger (14) verbindbar ist;
- eine physische Schnittstelle zweiter Art (20), mittels welcher die Kopplungsvorrichtung (10) mit der Datenverarbeitungsvorrichtung (16) verbindbar ist;
- eine Anzeigevorrichtung (22), mittels welcher Metadaten (M) ausgebbar sind, welche einen mit der Schnittstelle erster Art (18) verbundenen Datenträger (14) und/oder auf diesem Datenträger (14) gespeicherte Daten betreffen.

2. Kopplungsvorrichtung (10) nach Anspruch 1,
**dadurch gekennzeichnet, dass**
- mehrere Schnittstellen erster Art (18) vorgesehen sind;
- mittels der Anzeigevorrichtung (22) jeder der mehreren Schnittstellen erster Art (18) Metadaten (M) eines mit der jeweiligen Schnittstelle erster Art (18) verbundenen Datenträgers (14) zugeordnet sind.

3. Kopplungsvorrichtung (10) nach Anspruch 2,
**dadurch gekennzeichnet, dass**
die Anzeigevorrichtung (22) mehrere Displays (24) aufweist, welche derart angeordnet sind, dass jeweils eines der mehreren Displays (24) einer der mehreren Schnittstellen erster Art (18) oder einem mit einer dieser Schnittstellen erster Art (18) verbundenen Datenträger (14) zugeordnet ist.

4. Kopplungsvorrichtung (10) nach einem der vorhergehenden Ansprüche,
**dadurch gekennzeichnet, dass**
eine Benutzerschnittstelle (26) vorgesehen ist, mittels welcher ein Betriebszustand eines Datenträgers (14) in einem mit der Schnittstelle erster Art (18) verbundenen Zustand veränderbar ist.

5. Kopplungsvorrichtung (10) nach einem der vorhergehenden Ansprüche,
**gekennzeichnet durch**
eine Steuerungsvorrichtung (28), welche mit der Anzeigevorrichtung (22) und/oder mit der Benutzerschnittstelle (26) verbunden ist und welche dazu eingerichtet ist, die Anzeigevorrichtung (22) und/oder die Benutzerschnittstelle (26) anzusteuern.

6. System (30) aufweisend mehrere Datenträger (14) sowie eine Kopplungsvorrichtung (10) nach einem der vorhergehenden Ansprüche, wobei jeder der mehreren Datenträger (14) eine physische Schnittstelle (32) aufweist, welche in Form einer Steckverbindung mit einer Schnittstelle erster Art (18) der Kopplungsvorrichtung (10) verbindbar ist.

7. System (30) nach Anspruch 6,
**dadurch gekennzeichnet, dass**
eine Datenverarbeitungsvorrichtung (16) vorgesehen ist, welche mit einer Schnittstelle zweiter Art (20) der Kopplungsvorrichtung (10) verbindbar ist.

8. Verfahren (100) zur Auswertung von Datenträgern (14) mittels einer Kopplungsvorrichtung (10) nach einem der Ansprüche 1 bis 5, bei welchem
- Metadaten (M) eines mit einer Schnittstelle erster Art (18) der Kopplungsvorrichtung (10) verbundenen Datenträgers (14) ausgelesen werden (102);
- diese ausgelesenen Metadaten (M) der Schnittstelle erster Art (18) zugeordnet werden (104);
- mittels einer Anzeigevorrichtung (22) die der Schnittstelle erster Art (18) zugeordneten Metadaten (M) ausgegeben werden (106) .

9. Verfahren (100) nach Anspruch 8,
bei welchem ein verschlüsselter, mit der Schnittstelle erster Art (18) verbundener Datenträger (14) mittels einer Benutzerschnittstelle (26) der Kopplungsvorrichtung (10) entschlüsselt wird (108).

10. Verfahren (100) nach Anspruch 8 oder 9,
bei welchem mittels einer Benutzerschnittstelle (26) der Kopplungsvorrichtung (10) eine elektrische Verbindung zwischen der Schnittstelle erster Art (18) und dem mit dieser Schnittstelle erster Art (18) verbundenen Datenträger (14) hergestellt oder getrennt wird (110).

11. Verfahren (100) nach einem der Ansprüche 8 bis 10, bei welchem
- Metadaten (M) mehrerer Datenträger (14) ausgelesen werden (102), wobei jeder dieser Datenträger (14) mit je einer Schnittstelle erster Art (18) verbunden ist;
- einem Datenträger (14) zugehörige Metadaten (M) jeweils derjenigen Schnittstelle erster Art (18) zugeordnet werden (104), mit welcher dieser Datenträger (14) verbunden ist;
- mittels der Anzeigevorrichtung (22) die jeder der Schnittstellen erster Art (18) zugeordneten Metadaten (M) der jeweiligen Schnittstelle erster Art (18) visuell zugeordnet ausgegeben werden (106).

12. Verfahren (100) nach einem der Ansprüche 8 bis 11, bei welchem mittels der Anzeigevorrichtung (22)
- eine Information (I) einen Betriebszustand eines Datenträgers (14) betreffend angezeigt wird;
- diese Information (I) dem mit der Schnittstelle erster Art (18) verbundenen Datenträger (14) zugeordnet wird (104).

13. Computerprogramm, welches bei dessen Ausführung die Kopplungsvorrichtung (10) nach einem der Ansprüche 1 bis 5 dazu veranlasst, das Verfahren (100) nach einem der Ansprüche 8 bis 12 durchzuführen.

14. Computerprogramm, welches bei dessen Ausführung das System (30) nach einem der Ansprüche 6 oder 7 dazu veranlasst, das Verfahren (100) nach einem der Ansprüche 8 bis 12 durchzuführen.

15. Computerlesbares Medium aufweisend Instruktionen, welche die Kopplungsvorrichtung (10) nach einem der Ansprüche 1 bis 5 oder das System (30) nach einem der Ansprüche 6 oder 7 dazu veranlassen, das Verfahren (100) nach einem der Ansprüche 8 bis 12 durchzuführen.
